# EUROPÄISCHE PATENTSCHRIFT

(11) **EP 0 603 856 B1**
(45) Veröffentlichungstag und Bekanntmachung des Hinweises auf die Patenterteilung: **10.09.1997**
(21) Anmeldenummer: 93120689.0
(22) Anmeldetag: 22.12.1993
(51) Int. Cl.: F16B 7/02, E04B 1/58

(54) **Vorrichtung zum biegefesten Verbinden zweier Rohre**
Device for bending-resistant connection of two tubes
Dispositif pour le raccordement résistant à la flexion de deux tuyaux

(30) Priorität: 24.12.1992 DE 4244208
(43) Veröffentlichungstag der Anmeldung: 29.06.1994
(73) Patentinhaber: Sacher, Dominic, D-82041 Oberhaching (DE)
(72) Erfinder: Sacher, Dominic, D-82041 Oberhaching (DE)
(74) Vertreter: Flosdorff, Jürgen, Dr.

(56) Entgegenhaltungen:
- FR-A- 877 896
- FR-A- 2 297 344
- US-A- 2 463 124
- US-A- 2 893 298

## Beschreibung

Die Erfindung betrifft eine Vorrichtung zum biegefesten Verbinden zweier Rohre und insbesondere zum lösbaren Verbinden zweier Gitterträger bzw. sogenannter Traversen, bei denen zwei oder drei die Längsträger bildenden Rohre mittels angeschweißter Diagonalstäbe miteinander verbunden sind. Es wird jedoch betont, daß die Erfindung nicht auf die biegefeste Verbindung von Gitterträgern begrenzt ist, sondern allgemein zur biege- und zugfesten Verbindung zweier stabförmiger Bauteile, die einen Hohl- oder Vollquerschnitt haben können, geeignet ist.

Bisher werden zwei Rohre dadurch biegefest miteinander verbunden, daß ein Verbindungsrohrstück in die beiden Rohre eingesetzt und an diesen befestigt wird. Hierzu muß zunächst das Innenrohr zugeschnitten werden, und anschließend werden Löcher sowohl in die zu verbindenden Rohre als auch in das Verbindungsrohr gebohrt, woraufhin diese Löcher entgratet werden müssen, bevor die sich überlappenden Rohre zusammengeschraubt werden können. Wenn die zu verbindenden Rohre die Längsträger eines Gitterträgers sind, muß zuvor noch die Innenfläche der Rohre bearbeitet werden, beispielsweise eine dort befindliche Schweißnaht entfernt werden, bevor das Innenrohr überhaupt einsetzbar ist.

Eine solche herkömmliche Verbindung hat in aller Regel den Nachteil, daß das Verbindungsrohr nicht vollkommen fest, d. h. völlig ohne Spiel in den Außenrohren sitzt und daß die Löcher im Falle höherer Zugkräfte und den üblicherweise bei Gitterträgern anzutreffenden geringen Wandstärken ausreißen. Außerdem ist die Herstellung der Verbindung zwischen den Rohren mit einem großen Arbeitsaufwand verbunden, der entsprechend hohe Kosten mit sich bringt. Ein zusätzliches Problem besteht darin, die Löcher in den zu verbindenden Rohren und dem inneren Verbindungsrohr fluchtend auszubilden, so daß die Gewindebolzen die Löcher durchgreifen können.

In der FR-A-877 896 ist eine Kegelringsicherung für den axialen Zusammenbau zweier Wellen, Zapfen, Rohre oder dergleichen offenbart, bei der gemäß den Ausführungsformen der Figuren 7 und 8 Kegelringe, die in Längsrichtung aufgeschlitzt sein können, durch aufgeschraubte Spannmuttern auf den Rohren befestigt werden. Die Kegelringe werden von einem Zwischenteil übergriffen, das zwei der Außenkontur der Kegelringe entsprechende konische Abschnitte aufweist. Das Zwischenteil ist entweder nicht an den Kegelringen befestigt oder aber es wird ebenfalls mittels aufgeschraubter Spannmuttern auf den Kegelringen festgeklemmt.

Der vorliegenden Erfindung liegt die Aufgabe zugrunde, eine Rohrverbindung der betrachteten Art anzugeben, mit der mit hoher Zuverlässigkeit eine spielfreie, d.h. wackelfreie biegefeste Verbindung zweier Rohre hergestellt werden kann. Außerdem sollen im Verbindungsbereich größere Zugkräfte übertragbar sein, ohne daß die von Schrauben, Bolzen oder dergleichen durchgriffenen Löcher ausreißen.

Diese Aufgabe wird erfindungsgemäß durch die im Kennzeichen des Patentanspruchs 1 angegebenen Merkmale gelöst. Vorteilhafte Weiterbildungen der Erfindung sind in den Unteransprüchen gekennzeichnet.

Die erfindungsgemäße Verbindungsvorrichtung besteht aus drei Teilen, nämlich zwei Rohrverbindern, die auf die beiden Rohrenden aufgesteckt werden und ein Zwischenteil, das die beiden Rohrverbinder teilweise in sich aufnimmt. Hierzu haben die zwei Rohrverbinder einen hülsenförmigen Abschnitt, dessen Innenkontur im wesentlichen mit der Außenkontur der zu verbindenden Rohre übereinstimmt, damit der hülsenförmige Abschnitt ohne radiales Spiel auf das Rohrende aufgesetzt werden kann. Der hülsenförmige Abschnitt endet in einem Anschlag für das zugeordnete Rohr, der in einer zweckmäßigen Ausgestaltung der Erfindung durch eine geschlossene Wandfläche gebildet ist. Im Anschluß an diese Wand setzt sich der Rohrverbinder in einem Ansatz fort, der somit von dem zu verbindenden Rohr weg weist und eine leicht konisch sich zu seinem Kopfende verjüngende Form hat.

Das Zwischenteil hat eine derartige Innenkontur, daß die beiden Ansätze der Rohrverbinder formschlüssig in das Zwischenteil eingesetzt werden können, so daß auch hier eine in radialer Richtung spielfreie Verbindung besteht. Durch den hülsenförmigen Abschnitt eines Rohrverbinders und das zugeordnete Rohr sind in der Lage, in der das Rohr an dem Anschlag anliegt, miteinander fluchtende Löcher gebohrt, die vorzugsweise von einem Niet durchgriffen werden, mit dem der hülsenförmige Abschnitt dauerhaft an dem Rohr befestigt wird. Diese Befestigung hat den Vorteil, daß beim Stauchen des Niets die ohnehin formschlüssig aneinander anliegenden Flächen des hülsenförmigen Abschnitts und des Rohres fest aneinander gepreßt werden, wobei beträchtliche Reibungskräfte erzeugt werden, die einen Teil der im Verbindungsbereich wirkenden Zugkräfte aufnehmen (wenn nach Fertigstellung der Verbindung die Rohre oder Gitterträger belastet werden). Dies bedeutet, daß die Lochwandung durch die auftretenden Zugkräfte geringer belastet wird, so daß die Löcher erst bei weit größeren Zugkräften als bei herkömmlichen Rohrverbindungen ausreißen können.

Es wird betont, daß es auch im Rahmen der Erfindung liegt, anstelle einer Nietverbindung eine Klebe- oder Schweißverbindung vorzusehen.

Der vorzugsweise konische Ansatz des Rohrverbinders sollte nach einem weiteren Vorschlag der Erfindung massiv ausgebildet sein, d. h. einen Vollquerschnitt haben. Zur endgültigen Herstellung der Rohrverbindung werden miteinander fluchtende Löcher durch das Zwischenteil und die darin eingesetzten Ansätze gebohrt, durch die zur Herstellung einer leicht lösbaren Verbindung vorzugsweise zwei Stahlstifte gesteckt werden, die mit Stahlfedern gesichert sein können. Dabei befinden sich die zwei Rohrverbinder und das Zwischenteil in einer solchen Anordnung zueinander, daß die beiden Rohrverbinder mit einer um den zentralen Ansatz verlaufenden Schulter an der zugeordneten Stirnfläche des Zwischenteils anliegen. In dieser Position greifen die konischen Ansätze formschlüssig in das Zwischenteil ein.

Die drei Bauteile der erfindungsgemäßen Rohrverbindung sind mittels einer numerisch gesteuerten Fräsmaschine mit äußerster Präzision und kostengünstig herstellbar. Die Rohrverbinder werden in der Weise hergestellt, daß aus einem vorzugsweise zylindrischen Werkstück von einer Seite der hülsenförmige Abschnitt freigeschnitten wird, während von der anderen Seite durch Wegschneiden des radial äußeren Materials der konische Ansatz ausgebildet wird. Dazwischen verbleibt eine Wand mit einem Vollquerschnitt, die einerseits den Anschlag für das einzusteckende Rohr und andererseits die Schulter bildet, die in Anlage an das Zwischenteil gerät. Das Zwischenteil wird von beiden Seiten konisch ausgebohrt, wobei zwischen den konischen Abschnitten vorzugsweise ein kleinerer zylindrischer Hohlabschnitt verbleibt, da die beiden konischen Ansätze der Rohrverbinder in der Einbaulage vorzugsweise geringfügig voneinander beabstandet bleiben.

Das Zwischenteil ist -wie bereits erwähnt- mittels leicht lösbarer Stahlstifte mit den konischen Ansätzen verbunden, so daß hier im Gegensatz zur bevorzugten Nietverbindung zwischen hülsenförmigem Abschnitt und Rohr keine Reibungskräfte entstehen, die einen Teil der Zugbelastung aufnehmen können. Dies ist jedoch nicht nachteilig, da der konische Ansatz massiv ausgebildet ist und das Zwischenteil eine beträchtliche Wandstärke haben kann, die erheblich über der Wanddicke der zu verbindenden Rohre liegt. Aus diesen Gründen ist hier ein Ausreißen der Löcher mit Sicherheit zu verhindern.

Die erfindungsgemäße Rohrverbindungsvorrichtung ist erheblich billiger herzustellen als eine herkömmliche Rohrverbindung, und sie kann größere Zugkräfte ohne Ausreißen der Löcher aufnehmen. Außerdem ist sie leicht lösbar, so daß ein Trägersystem problemlos wiederholt auf- und abgebaut werden kann.

Vorteilhafterweise bestehen die Rohrverbinder und das Zwischenteil aus Aluminium, das leicht von Fräsmaschinen bearbeitet werden kann. Selbstverständlich ist die Erfindung nicht auf dieses Material beschränkt. Für leichtere Konstruktionen mit geringeren Belastungen kommen z. B. auch Kunststoffverbindungsteile in Betracht.

Die erfindungsgemäße Rohrverbindungsvorrichtung ist selbstverständlich nicht nur zum Verbinden von kreiszylindrischen Rohren geeignet, sondern diese können praktisch jede beliebige Form haben. Die Innenkontur des hülsenförmigen Abschnitts des Rohrverbinders muß stets mit der Außenkontur des zugehörigen Rohres übereinstimmen, damit der Rohrverbinder spielfrei auf das Rohr aufgesetzt werden kann. Die Außenkontur der Rohrverbinder und des Zwischenteils braucht nicht mit der Rohrform übereinzustimmen.

Die Erfindung wird nachfolgend anhand eines bevorzugten Ausführungsbeispiels in näheren Einzelheiten beschrieben. Dabei zeigen:
- Fig. 1: einen Längsschnitt durch einen Rohrverbinder;
- Fig. 2: eine Aufsicht auf den Rohrverbinder gemäß Fig. 1;
- Fig. 3: einen Querschnitt durch den hülsenförmigen Abschnitt des Rohrverbinders gemäß Fig. 1;
- Fig. 4: einen Längsschnitt durch das Zwischenteil;
- Fig. 5: eine Aufsicht auf das Zwischenteil gemäß Fig. 4;
- Fig. 6: einen Querschnitt durch das Zwischenteil gemäß Fig. 4;
- Fig. 7: den zusammengesetzten Zustand der Rohrverbindung in einer schematischen Darstellung;
- Fig. 8: eine Darstellung ähnlich Fig. 8, die die Lage der Stahlstifte zeigt und
- Fig. 9: eine Seitenansicht eines Stahlstiftes und einer Stahlfeder.

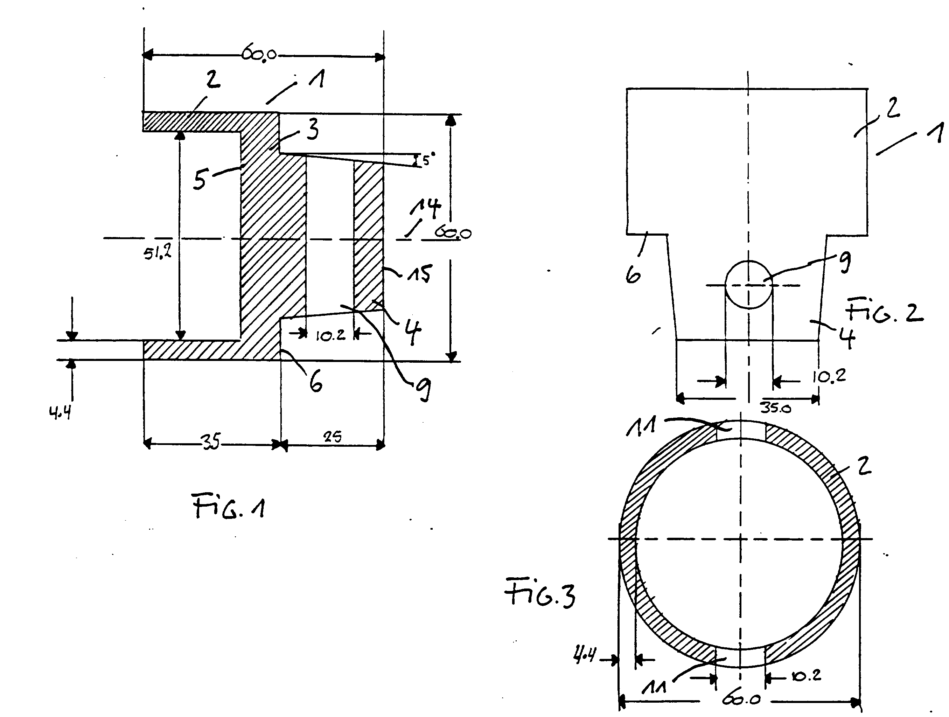

Mit Bezug auf die Figuren 1 bis 3 wird zunächst ein Rohrverbinder 1 beschrieben. Der Rohrverbinder enthält einen hülsenförmigen Abschnitt 2, der sich bis zu einer Wand 3 erstreckt, von der ein leicht konischer Ansatz 4 vorsteht. Die Zwischenwand 3 bildet hülsenseitig einen Anschlag 5 für ein einzustekkendes Rohr und auf der anderen Seite eine umlaufende Schulter 6, an der in der Montagestellung ein Zwischenteil 7 mit einer Stirnfläche 8 (siehe Figure 4) anliegt.

Durch den konusförmigen Ansatz 4, dessen Neigungswinkel etwa 50 beträgt, ist eine Durchgangsbohrung 9 gebohrt, die in der Montagestellung mit zwei Durchgangsbohrungen 10 des Zwischenteils 7 fluchtet.

Außerdem enthält der hülsenförmige Abschnitt 2 zwei miteinander fluchtende Löcher 11, mit denen in den Figuren nicht dargestellte Löcher in den Endabschnitten der zu verbindenden Rohre 12 (siehe Figur 7) fluchten, um zur dauerhaften Verbindung dieser Teile einen Stauchniet aufzunehmen.

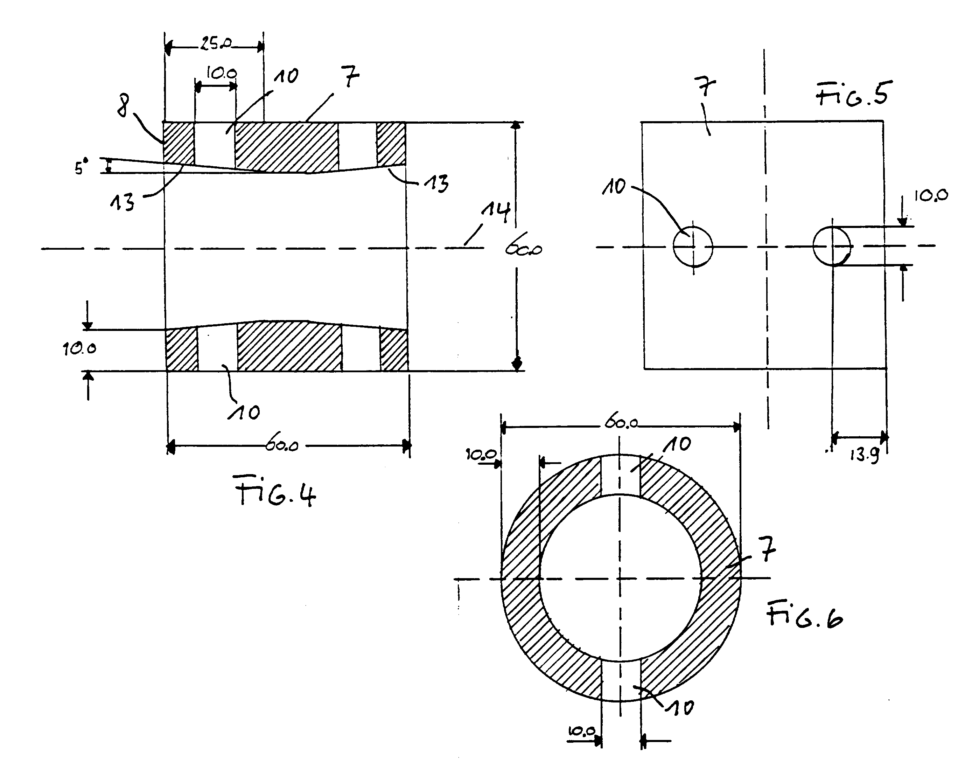

Das in den Figuren 4 bis 6 dargestellte Zwischenteil 7 hat ebenso wie der Rohrverbinder 1 in der dargestellten Ausführungsform eine kreiszylindrische Außenform, wobei der Außendurchmesser des Zwischenteils 7 mit dem Außendurchmesser des hülsenförmigen Abschnitts 2 übereinstimmt. Das Zwischenteil 7 enthält zwei konische zentrale Bohrungen 13, die symmetrisch zur Längsmittelachse 14 verlaufen, wobei der Konuswinkel mit demjenigen des konischen Ansatzes 4 übereinstimmt.

Figur 7 zeigt die biegefeste Verbindung zweier Rohre 12 gleichen Querschnitts mittels zweier identischer Rohrverbinder 1 und eines Zwischenteils 7. In der Montagestellung liegen die Stirnflächen der Rohre 12 an den Anschlägen 5 der Rohrverbinder 1 an, und ein nicht dargestellter Stauchniet befestigt diese beiden Teile dauerhaft aneinander. Die konischen Ansätze 4 sind in das Zwischenteil 7 eingeschoben, bis die Außenfläche der konischen Ansätze 4 an den Innenflächen der konischen Bohrungen 13 des Zwischenteils 7 anliegen. In diesem Zustand sind die vorderen Stirnflächen 15 der konischen Ansätze 4 etwas voneinander beabstandet.

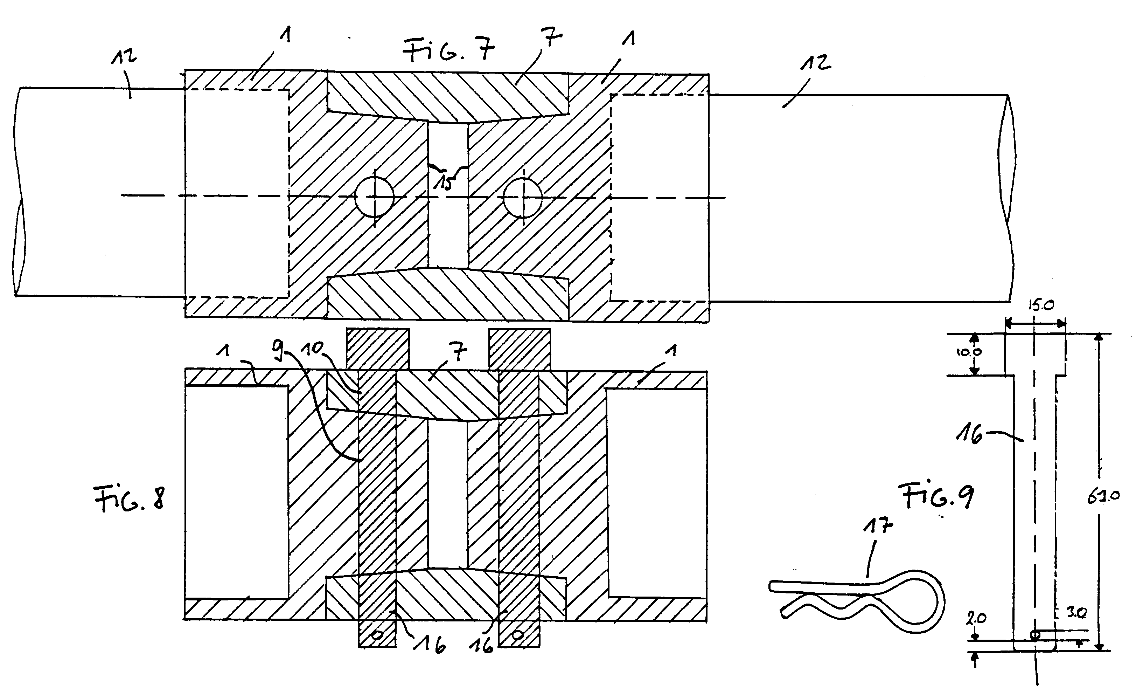

Zwei Stahlstifte 16 durchgreifen die miteinander fluchtenden Löcher 10 und 9 und bilden eine leicht lösbare Verbindung zwischen dem Zwischenteil 7 und den Rohrverbindern 1, die durch eine Stahlfeder 17 (siehe Figur 9) gesichert wird.

## Patentansprüche

1. Vorrichtung zum biegefesten Verbinden zweier Rohre, mit zwei Rohrverbindern (1) zur Befestigung an jeweils einem Rohr (12) mit einem Anschlag (5) für das zugeordnete Rohr (12) und einem Zwischenteil (7) zur Verbindung der beiden Rohrverbinder (1), wobei jeder Rohrverbinder (1) einen hülsenförmigen Abschnitt (2) zur Aufnahme des Rohres (12) und einen konischen zentralen Ansatz (4) aufweist, und das Zwischenteil zum formschlüssigen Eingriff mit den beiden konischen Ansätzen (4) entsprechende konische Bohrungen (13) aufweist,
**dadurch gekennzeichnet**,
daß der konische Ansatz (4) jedes Rohrverbinders (1) axial von dem hülsenförmigen Abschnitt (2) wegweist und formschlüssig mit dem Zwischenteil (7) in Eingriff steht und daß das Zwischenteil (7) mittels durchgesteckter Stifte (16) an den Ansätzen (4) der Rohrverbinder (1) befestigt ist.

2. Vorrichtung nach Anspruch 1,
dadurch gekennzeichnet, daß der hülsenförmige Abschnitt (2) formschlüssig auf das zugehörige Rohr (12) aufgesteckt ist.

3. Vorrichtung nach Anspruch 1 oder 2,
dadurch gekennzeichnet, daß die hülsenförmigen Abschnitte (2) mittels Nieten an den Rohren (12) befestigt sind.

4. Vorrichtung nach Anspruch 1 oder 2,
dadurch gekennzeichnet, daß die hülsenförmigen Abschnitte (2) mit einem Klebemittel an den Rohren (12) befestigt sind.

5. Vorrichtung nach Anspruch 1 oder 2,
dadurch gekennzeichnet, daß die hülsenförmigen Abschnitte (2) durch Schweißen an den Rohren (12) befestigt sind.

6. Vorrichtung nach einem der Ansprüche 1 bis 5,
dadurch gekennzeichnet, daß in der Befestigungslage die Stirnflächen (15) der konischen Ansätze (4) geringfügig voneinander beabstandet sind.

7. Vorrichtung nach einem der Ansprüche 1 bis 6,
dadurch gekennzeichnet, daß die beiden Rohrverbinder (1) und das Zwischenteil (7) dieselbe Umfangsform haben.

8. Vorrichtung nach einem der Ansprüche 1 bis 7,
dadurch gekennzeichnet, daß der Anschlag (5) des Rohrverbinders (1) durch eine geschlossene Wand gebildet ist, an der der konische Ansatz (4) angesetzt ist.

9. Vorrichtung nach einem der Ansprüche 1 bis 8,
dadurch gekennzeichnet, daß der konische Ansatz (4) massiv ausgebildet ist.

10. Vorrichtung nach einem der Ansprüche 1 bis 9,
dadurch gekennzeichnet, daß die Rohrverbinder (1) und das Zwischenteil (7) aus Aluminium bestehen.

## Claims

1. A device for rigidly connecting two pipes, comprising two pipe connectors (1) to be secured to one respective pipe (12), a stop (5) for the associated pipe (12) and an intermediate member (7) for connecting the two pipe connectors (1), each of said pipe connectors (1) having a sleeve-like section (2) for receiving the pipe (12) and a conical central attachment (4), and the intermediate member comprising corresponding conical bores (13) for positive engagement with the two conical attachments (4),
**characterized in**
that the conical attachment (4) of each pipe connector (1) is oriented away from the sleeve-like section (2) in axial direction and is in positive engagement with the intermediate member (7), and that the intermediate member (7) is secured to the attachments (4) of the pipe connectors (1) by means of pins (16) passing therethrough.

2. The device according to claim 1,
characterized in that the sleeve-like section (2) is positively attached to the associated pipe (12).

3. The device according to claim 1 or 2,
characterized in that the sleeve-like sections (2) are secured to the pipes (12) by means of rivets.

4. The device according to claim 1 or 2,
characterized in that the sleeve-like sections (2) are secured to the pipes (12) by means of an adhesive.

5. The device according to claim 1 or 2,
characterized in that the sleeve-like sections (2) are secured to the pipes (12) by welding.

6. The device according to any one of claims 1 to 5,
characterized in that in the secured state the front faces (15) of the conical attachments (4) are slightly spaced apart from one another.

7. The device according to any one of claims 1 to 6,
characterized in that the two pipe connectors (1) and the intermediate member (7) have the same circumferential shape.

8. The device according to any one of claims 1 to 7,
characterized in that the stop (5) of the pipe connector (1) is formed by a closed wall to which the conical attachment (4) is attached.

9. The device according to any one of claims 1 to 8,
characterized in that the conical attachment (4) is of a solid type.

10. The device according to any one of claims 1 to 9,
characterized in that the pipe connector (1) and the intermediate member (7) consist of aluminum.

## Revendications

1. Dispositif pour le raccordement rigide à la torsion de deux tuyaux, comprenant deux jonctions de tuyaux (1) pour la fixation respective sur un tuyau (12) muni d'une butée (5) pour le tuyau associé (12) et une pièce intercalaire (7) pour le raccordement des deux jonctions de tuyau (1), chaque jonction de tuyau (1) présentant un tronçon (2) en forme de douille pour le logement du tuyau (12) et un appendice central conique (4), la pièce intercalaire présentant des perçages coniques (13) correspondants pour la mise en prise par concordance des formes avec les deux appendices coniques (4),
caractérisé en ce que
l'appendice conique (4) de chaque jonction de tuyau (1) est détourné axialement du tronçon (2) en forme de douille et s'enclenche par coïncidence des formes avec la pièce intercalaire (7) et en ce que la pièce intercalaire (7) est fixée sur les appendices (4) des jonctions de tuyau (1) au moyen de goupilles enfichées (16).

2. Dispositif selon la revendication 1,
caractérisé en ce que le tronçon (2), en forme de douille, est coiffé sur le tuyau respectif (12) par coïncidence des formes.

3. Dispositif selon la revendication 1 ou 2,
caractérisé en ce que les tronçons (2), en forme de douille, sont fixés aux tuyaux (12) au moyen de rivets.

4. Dispositif selon la revendication 1 ou 2,
caractérisé en ce que les tronçons (2), en forme de douille, sont fixés aux tuyaux (12) avec un adhésif.

5. Dispositif selon la revendication 1 ou 2,
caractérisé en ce que les tronçons (2), en forme de douille, sont fixés aux tuyaux (12) par soudage.

6. Dispositif selon l'une des revendications 1 à 5,
caractérisé en ce qu'en position de fixation, les surfaces avant (15) des appendices coniques (4) sont placées légèrement à distance les unes des autres.

7. Dispositif selon l'une des revendications 1 à 6,
caractérisé en ce que les deux jonctions de tuyau (1) et la pièce intercalaire (7) présentent la même forme périphérique.

8. Dispositif selon l'une des revendications 1 à 7,
caractérisé en ce que la butée (5) de la jonction de tuyau (1) est constituée par une paroi fermée sur laquelle est placé l'appendice conique (4).

9. Dispositif selon l'une des revendications 1 à 8,
caractérisé en ce que l'appendice conique (4) est de configuration massive.

10. Dispositif selon l'une des revendications 1 à 9,
caractérisé en ce que les jonctions de tuyau (1) et la pièce intercalaire (7) se composent d'aluminium.
